# EUROPEAN PATENT APPLICATION

(11) **EP 3 395 916 A1**
(43) Date of publication of application: **31.10.2018**
(21) Application number: 16878538.4
(22) Date of filing: 15.12.2016
(51) Int. Cl.: C09D 175/14, B32B 25/08, B32B 27/40, B60C 11/00, C09D 7/12

(54) **COATING COMPOSITION, CURED FILM, LAMINATE, AND TIRE**

(30) Priority: 22.12.2015 JP 2015250575
(71) Applicant: Bridgestone Corporation, Tokyo 104-8340 (JP)
(72) Inventor: URATA, Tomohiro, Tokyo 104-8340 (JP); MUSHA, Shinichi, Tokyo 104-8340 (JP); HAYAKAWA, Kotaro, Tokyo 104-8340 (JP); FUNAKI, Tatsuya, Tokyo 104-8340 (JP); OOSAKU, Akihide, Tokyo 104-8340 (JP)
(74) Representative: Lang, Johannes
(86) International application number: PCT/JP2016/087379
(87) International publication number: WO 2017/110647

(57) **Abstract**

An object of the present invention is to provide a coating composition that is capable of providing a cured film excellent in adhesion to a base material and flexural fatigue resistance. Another object of the present invention is to provide a cured film obtained from the coating composition, and a laminate and a tire each having the cured film formed thereon. The coating composition of the present invention contains a polythiol compound (A), a polyurethane having an ethylenically unsaturated group (B), and a radical generator (C).

## Description

### Technical Field

The present invention relates to a coating composition, a cured film, a laminate, and a tire.

### Background Art

An external member of a tire except for a tread surface is demanded to inhibit ozone cracking, but the current situation is that it is difficult to achieve the inhibition by improving the composition of the tire itself. Accordingly, a surface protective film capable of inhibiting ozone cracking and not deteriorating the tire performance has been developed.

PTL 1 relates to protection of a surface condition of an external surface of a tire particularly against ozone, and to improvement of an external appearance thereof, and describes a tire coated with a coating composition at least on a part of the rubber external surface thereof containing substantially an unsaturated diene elastomer as a base material, in which the coating composition is formed of a polyurethane prepared with a polyol selected from an aliphatic polyether or polyester and a polyether or polyester having a semi-aromatic main chain, the bond between the elastomer and the polyurethane is formed with a polar functional group, and the coating composition contains a surfactant.

### Citation List

### Patent Literature

PTL 1: JP 2003-535762 A

### Summary of Invention

### Technical Problem

An object of the present invention is to provide a coating composition that is capable of providing a cured film excellent in adhesion to a base material and flexural fatigue resistance. Another object of the present invention is to provide a cured film obtained from the coating composition, and a laminate and a tire each having the cured film formed thereon.

### Solution to Problem

As a result of earnest investigations made by the present inventors, it has been found that the problem can be solved by a coating composition containing a polythiol compound (A), a polyurethane having an ethylenically unsaturated group (B), and a radical generator (C).

Specifically, the present invention relates to the following items <1> to <8>.
<1> A coating composition containing a polythiol compound (A), a polyurethane having an ethylenically unsaturated group (B), and a radical generator (C).
<2> The coating composition according to the item <1>, further containing water (D).
<3> A cured film, which is formed by curing the coating composition according to the item <1> or <2>.
<4> The cured film according to the item <3>, which has a tensile stress at 25% elongation (modulus M25) of 3 MPa or less.
<5> A laminate including the cured film according to the item <3> or <4>.
<6> A tire including the cured film according to the item <3> or <4> formed at least on a part of an external surface thereof.
<7> A tire including the cured film according to the item <3> or <4> formed on grooves of a tread and/or a sidewall thereof.
<8> The tire according to the item <6> or <7>, wherein the cured film has a thickness of from 5 to 200 µm.

### Advantageous Effects of Invention

According to the present invention, a coating composition that is capable of providing a cured film excellent in adhesion to a base material and flexural fatigue resistance can be provided. According to the present invention, furthermore, a cured film obtained from the coating composition, and a laminate and a tire each having the cured film formed thereon can be provided.

### Description of Embodiments

The present invention will be described in detail with reference to embodiments thereof. In the following description, the expression "from A to B" showing a numeral range means a numeral range that includes the end points A and B, and shows "A or more and B or less" (for the case of A < B) or "A or less and B or more" (for the case of A > B).

The expressions part by mass and percentage by mass have the same meanings as part by weight and percentage by weight respectively.

### [Coating Composition]

The coating composition of the present invention contains a polythiol compound (A) (which may be hereinafter referred to as a component A), a polyurethane having an ethylenically unsaturated group (B) (which may be hereinafter referred to as a component B), and a radical generator (C) (which may be hereinafter referred to as a component C). The coating composition of the present invention is preferably applied to a base material containing diene rubber, and is particularly preferably a coating composition for a tire, i.e., the base material is a tire.

As described in PTL 1, the ozone resistance of the tire has been ordinarily enhanced by providing a coating thereon. However, the ordinary coating composition is insufficient in adhesion to a base material, such as a tire, and in PTL 1, the base material is necessarily functionalized by providing polarity thereon through a surface treatment of the base material, which may deteriorate the productivity.

Furthermore, a surface protective film provided on a tread surface of a tire may provide possibility of change in performance of the tread between before and after abrasion of the surface protective film, and for suppressing the change, there is a demand for a coating composition that is capable of being coated specifically on the groove bottom, the side wall, and the like thereof. While examples of the method for specifically coating on the groove bottom and the side wall of the tire include a spray method, the composition necessarily has a low viscosity for spraying the composition. Moreover, there is a demand for suppressing VOC (volatile organic compound) due to the environmental consideration, and thus a coating agent composition dispersed in water is preferred.

As a result of earnest investigations made by the present inventors, it has been found that a cured film excellent in adhesion to a base material and flexural fatigue resistance without a pretreatment of a base material can be obtained by using a coating composition containing the components A to C, and thus the present invention has been completed.

Although the specific mechanism thereof is not clear, a part thereof can be estimated as follows.

When a radical is generated from the radical generator (component C) through heating, ultraviolet ray irradiation, or the like, the polythiol compound (component A) and the diene compound (such as natural rubber and diene rubber) contained in the base material are bonded to each other through ene-thiol reaction with the radical. The polythiol compound (component A) also reacts with the ethylenically unsaturated group contained in the polyurethane (component B), and further the ethylenically unsaturated groups of the polyurethane undergo radical polymerization. Consequently, it is estimated that the coating composition is cured, and simultaneously crosslinking is formed between the base material and the coating composition, thereby providing a cured film excellent in adhesion to the base material. Furthermore, it is estimated that the use of the polyurethane excellent in flexibility provides a cured film excellent also in flexural fatigue resistance.

The present invention will be described in detail below.

### <Polythiol Compound (A)>

The coating composition of the present invention contains a polythiol compound (A) (component A). The component A forms crosslinking with the component B described later, and also forms crosslinking with the base material, so as to function as a crosslinking agent, and thus contributes to the enhancement of the adhesion of the cured film.

In the present invention, the polythiol compound (A) means a compound that has two or more thiol groups (which may also be referred to as mercapto groups, -SH) in one molecule.

The polythiol compound (A) is not particularly limited, and is preferably a compound having from 2 to 6 thiol groups in one molecule from the standpoint of the enhancement of the adhesion.

The polythiol compound (A) includes primary, secondary, and tertiary compounds, and is preferably a primary compound from the standpoint of the enhancement of the adhesion.

The molecular weight of the polythiol compound (A) is preferably 3,000 or less, more preferably 2,000 or less, further preferably 1,000 or less, still further preferably 900 or less, and still more further preferably 800 or less, from the standpoint of the enhancement of the adhesion. In the case where the polythiol compound (A) is a polymer, the molecular weight thereof is a styrene-conversion number average molecular weight measured by gel permeation chromatography (GPC).

Examples of the polythiol compound (A) include an aliphatic polythiol compound, which may contain a hetero atom, and an aromatic polythiol compound, which may contain a hetero atom, and an aliphatic polythiol compound, which may contain a hetero atom, is preferred from the standpoint of the enhancement of the adhesion.

The aliphatic polythiol compound, which may contain a hetero atom, herein means an aliphatic compound, which may contain a heteroatom, having two or more thiol groups in one molecule. The aromatic polythiol compound, which may contain a hetero atom, herein means an aromatic compound, which may contain a heteroatom, having two or more thiol groups in one molecule.

The hetero atom is preferably at least one selected from the group consisting of an oxygen atom, a nitrogen atom, a sulfur atom, a phosphorus atom, a halogen atom, and a silicon atom, more preferably at least one selected from the group consisting of an oxygen atom, a nitrogen atom, a sulfur atom, a phosphorus atom, and a halogen atom, and further preferably at least one selected from the group consisting of an oxygen atom, a nitrogen atom, and a sulfur atom, from the standpoint of the enhancement of the adhesion.

Examples of the aliphatic polythiol compound, which may contain a hetero atom, include a polythiol having an aliphatic hydrocarbon as the other moiety than the thiol groups, such as an alkanedithiol having from 2 to 20 carbon atoms, a polythiol obtained by substituting halogen atoms of a halohydrin adduct of an alcohol with thiol groups, a polythiol formed of a hydrogen sulfide reaction product of a polyepoxide compound, a thioglycolate ester obtained through esterification of a polyhydric alcohol having from 2 to 6 hydroxy groups in the molecule and thioglycolic acid, a mercapto fatty acid ester obtained through esterification of a polyhydric alcohol having from 2 to 6 hydroxy groups in the molecule and a mercapto fatty acid, a thiol isocyanurate compound obtained through reaction of an isocyanurate compound and thiol, a thiol containing a polysulfide group, a silicone modified with thiol groups, and a silsesquioxane modified with thiol groups.

Examples of the polyhydric alcohol compound having from 2 to 6 hydroxy groups in the molecule include an alkanediol having from 2 to 20 carbon atoms, a poly(oxyalkylene) glycol, glycerol, diglycerol, trimethylolpropane, ditrimethylolpropane, pentaerythritol, and dipentaerythritol.

Among these, a polythiol compound selected from the group consisting of a polythiol having an aliphatic hydrocarbon as the other moiety than the thiol groups, a polythiol obtained by substituting halogen atoms of a halohydrin adduct of an alcohol with thiol groups, a polythiol formed of a hydrogen sulfide reaction product of a polyepoxide compound, a thioglycolate ester, a mercapto fatty acid ester, and a thiol isocyanurate compound is more preferred, a polythiol compound selected from the group consisting of a mercapto fatty acid ester and a thiol isocyanurate compound is further preferred, and a mercapto fatty acid ester is still further preferred, from the standpoint of the enhancement of the adhesion. A thiol that does not contain a polysulfide group and a siloxane bond is preferred from the same standpoint.

### (Polythiol having Aliphatic Hydrocarbon as Other Moiety than Thiol Groups)

Examples of the polythiol having an aliphatic hydrocarbon as the other moiety than the thiol groups include an alkanedithiol having from 2 to 20 carbon atoms.

Examples of the alkanedithiol having from 2 to 20 carbon atoms include 1,2-ethaneditiol, 1,1-propanedithiol, 1,2-propanedithiol, 1,3-propanedithiol, 2,2-propanedithiol, 1,4-butanedithiol, 2,3-butanedithiol, 1,5-pentanedithiol, 1,6-hexanedithiol, 1,8-octanedithiol, 1,10-decanedithiol, 1,1-cyclohexanedithiol, and 1,2-cyclohexanedithiol.

### (Thioglycolate Ester)

Examples of the thioglycolate ester include 1,4-butanediol bisthioglycolate, 1,6-hexanedithiol bisthioglycolate, trimethylolpropane tristhioglycolate, and pentaerythritol tetrakisthioglycolate.

### (Mercapto Fatty Acid Ester)

The mercapto fatty acid ester is preferably a mercapto fatty acid ester having a primary thiol group, and more preferably a β-mercaptopropionate ester of a polyhydric alcohol having from 2 to 6 hydroxy groups in one molecule, from the standpoint of the enhancement of the adhesion. The mercapto fatty acid ester having a primary thiol group preferably has from 4 to 6 thiol groups, more preferably 4 or 5 thiol groups, in one molecule, and further preferably 4 thiol groups, in one molecule, from the standpoint of the enhancement of the adhesion.

Preferred examples of the β-mercaptopropionate ester having a primary thiol group include tetraethylene glycol bis(3-mercaptopropionate) (EGMP-4), trimethylolpropane tris(3-mercaptopropionate) (TMMP), pentaerythritol tetrakis(3-mercaptopropionate) (PEMP), and dipentaerythritol hexakis(3-mercaptopropionate) (DPMP). Among these, PEMP and DPMP are preferred, and PEMP is more preferred.

Examples of the β-mercaptopropionate ester having a secondary thiol group include an ester of β-mercaptobutanoic acid and a polyhydric alcohol having from 2 to 6 hydroxy groups in one molecule, and specific examples thereof include 1,4-bis(3-mercaptobutyryloxy)butane, pentaerythritol tetrakis(3-mercaptobutyrate), 1,3,5-tris(3-mercaptobutyryloxyethyl)-1,3,5-triazin-2,4,6(1H,3H,5H)-trione.

### (Thiol Isocyanurate Compound)

The thiol isocyanurate compound obtained through reaction of an isocyanurate compound and thiol is preferably a thiol isocyanurate compound having a primary thiol group from the standpoint of the enhancement of the adhesion. The thiol isocyanurate compound having a primary thiol group preferably has from 2 to 4 thiol groups, and more preferably 3 thiol groups, in one molecule, from the standpoint of the enhancement of the adhesion.

The thiol isocyanurate compound having a primary thiol group is preferably tris((3-mercaptoprpopyonyloxy)ethyl) isocyanurate (TEMPIC).

### (Silicone Modified with Thiol Groups)

Examples of the silicone modified with thiol groups include KF-2001, KF-2004, and X-22-167B, trade names (produced by Shin-Etsu Chemical Co., Ltd.), SMS042 and SMS022, trade names (produced by Gelest, Inc.), and PS849 and PS850, trade names (produced by UCT Corporation).

### (Aromatic Polythiol)

The aromatic polythiol may contain a hetero atom, and examples of the aromatic thiol include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(*p*-methyoxyphenyl)propane-2,2-dithiol, 1,3-diphenylpropane-2,2-dithiol, phenylmethane-1,1-dithiol, 2,4-di(*p*-mercaptophenyl)pentane, and triazinedithiol.

The component A may be used solely or as a combination of two or more kinds thereof. In the coating composition of the present invention, the content of the component A is preferably from 0.1 to 100 parts by mass, more preferably from 0.3 to 75 parts by mass, and further preferably from 1 to 50 parts by mass, per 100 parts by mass of the component B.

When the content of the component A is in the aforementioned range, the crosslinked structure can be formed appropriately, providing a cured film excellent in adhesion.

Assuming that the number of the ethylenically unsaturated group in one molecule of the component B described later is represented by X, the molar number of the component B is represented by Y, the number of the thiol groups in one molecule of the component A is represented by s, the molar number of the component A is represented by t, and X × Y is 100, s × t is preferably from 20 to 200, more preferably from 40 to 180, and further preferably from 60 to 160.

The relationship between the thiol groups of the component A and the ethylenically unsaturated group of the component B is in the aforementioned range, the crosslinked structure can be formed appropriately, providing a cured film excellent in adhesion.

### <Polyurethane having Ethylenically Unsaturated Group (B)>

The coating composition of the present invention contains a polyurethane having an ethylenically unsaturated group (B) (component B). The ethylenically unsaturated groups of the component (B) are reacted with each other, and simultaneously have reactivity with the component A. Furthermore, it is considered that a part thereof has reactivity with the internal olefin of the base material. The component B forms a cured film through curing thereof, and in the case where the base material contains diene rubber, enhances the ozone resistance thereof. It is estimated that the component B contribute to the excellent flexibility due to the polyurethane skeleton thereof, and the enhancement of the followability to deformation of rubber.

The component B is not particularly limited, as far as it is a polyurethane having at least one ethylenically unsaturated group. While the ethylenically unsaturated group may be contained in the interior of the main chain or the side chain, it is preferred that the ethylenically unsaturated group is contained at the end of the main chain or the side chain, it is preferred that a (meth)acryloyloxy group (CH₂=CR-C(=O)-O-, wherein R represents a hydrogen atom or a methyl group) is contained at the end of the main chain or the side chain, and it is further preferred that an acryloyloxy group (CH₂=CH-C(=O)-O-) is contained at the end of the main chain or the side chain, from the standpoint of the reactivity (curing property).

In the present invention, the "main chain" means the relatively longest bond chain in the molecule constituting the polymer, and the "side chain" means a carbon chain branched from the main chain. The main chain and the side chain may contain a hetero atom.

The component B is preferably a polyurethane that is formed at least from a polyisocyanate compound (b1) and a polyol compound (b2).

Examples of the method for forming the polyurethane having an ethylenically unsaturated group (B) include (1) a method of using a polyol having an ethylenically unsaturated group in the interior of the main chain, such as a polyalkadienediol, as the polyol compound, (2) a method of using a compound having two or more hydroxy groups and at least one end ethylenically unsaturated group, as the polyol compound, (3) a method of reacting a compound having one hydroxy group and at least one ethylenically unsaturated group with both the aforementioned polyisocyanate compound and the aforementioned polyol compound, or reacting the compound after forming a polyurethane having an end isocyanate group, and (4) a method of reacting a compound having one isocyanate group and at least one ethylenically unsaturated group with both the aforementioned polyisocyanate compound and the aforementioned polyol compound, or reacting the compound after forming a polyurethane having an end hydroxy group.

The polyisocyanate compound (b1) is not particularly limited, as far as the compound has at least two isocyanate groups, and may be any of an aliphatic polyisocyanate compound, an alicyclic polyisocyanate compound, an aromatic polyisocyanate compound, and an araliphatic polyisocyanate compound.

Examples of the aliphatic polyisocyanate compound include tetramethylene diisocyanate, dodecamethylene diisocyanate, hexamethylene diisocyanate, 2,2,4-trimethylhexamethylene diisocyanate, lysine diisocyanate, 2-methylpentane 1,5-diisocyanate, and 3-methylpentane 1,5-diisocyanate.

Examples of the alicyclic polyisocyanate include isophorone diisocyanate, hydrogenated xylylene diisocyanate, 4,4'-dicyclohexylmethane diisocyanate, 1,4-bicyclohexane diisocyanate, methylcyclohexylene diisocyanate, and 1,3-bis(isocyanatomethyl)cyclohexane.

Examples of the aromatic polyisocyanate compound include tolylene diisocyanate, 2,2'-diphenylmethane diisocyanate, 2,4'-diphenylmethane diisocyanate, 4,4'-diphenylmethane diisocyanate (MDI), 4,4'-dibenzyl diisocyanate, 1,5-napthylene diisocyanate, xylylene diisocyanate, 1,3-phenylene diisocyanate, and 1,4-phenylene diisocyanate.

Examples of the araliphatic polyisocyanate compound include a dialkyldiphenylmethane diisocyanate, a tetraalkyldiphenylmethane diisocyanate, and α,α,α,α,-tetramethylxylylene diisocyanate.

Examples of the polyisocyanate compound also include a dimer and a trimer of the aforementioned compounds, and a modified compound thereof, such as a burette form of an isocyanate.

The polyisocyanate compound may be used solely or as a combination of two or more kinds thereof.

Examples of the polyol having an ethylenically unsaturated group in the interior of the main chain used in the method (1) include a polyalkadienediol.

Examples of the polyalkadienediol include polyisoprenediol and polybutadienediol.

In the case where the polyurethane having an ethylenically unsaturated group in the interior of the main chain obtained with the polyol having an ethylenically unsaturated group in the interior of the main chain is used as the component B, the number of the thiol groups in one molecule of the component A is preferably 4 or less, and more preferably 3 or less.

The compound having two or more hydroxy groups and at least one end ethylenically unsaturated group used in the method (2) is preferably a compound obtained through reaction of a diglycidyl compound and (meth)acrylic acid.

Examples of the diglycidyl compound include an aliphatic diglycidyl compound that is derived from an α,ω-diol compound having from 4 to 12 carbon atoms, or derived from a polyoxyalkylenediol compound containing an oxyalkylene group (such as polyethylene glycol, polypropylene glycol, and a mixture thereof). Examples of the aliphatic diglycidyl compound include 1,4-butanediol diglycidyl ether, 1,6-hexanediol diglycidyl ether, cyclohexanedimethanol diglycidyl ether, polyethylene glycol diglycidyl ether, polypropylene glycol diglycidyl ether, hydrogenated bisphenol A diglycidyl ether, hydrogenated bisphenol F diglycidyl ether, and ethoxylated and/or propoxylated equivalent compounds of these compounds. A diglycidyl ester compound, such as diglycidyl hexahydrophthalate, may also be used.

A diglycidyl ester compound, such as diglycidyl phthalate, *N*,*N*-diglycidylaniline, and *N*,*N*-diglycidyl-4-glycidyloxyaniline may also be used.

A partially esterified compound of an aliphatic or aromatic polyol with (meth)acrylic acid may also be used.

Examples of the compound having one hydroxy group and at least one ethylenically unsaturated group used in the method (3) include a partially esterified product of a polyhydric polyol compound with (meth)acrylic acid, such as a hydroxyalkyl (meth)acrylate compound, which has one hydroxy group remaining free.

Specific examples thereof include hydroxyethyl (meth)acrylate, hydroxypropyl (meth)acrylate, hydroxybutyl (meth)acrylate, and a compound at least two (meth)acryloyloxy groups, such as glycerol di(meth)acrylate, trimethylolpropane di(meth)acrylate, pentaerythritol tri(meth)acrylate, ditrimethylolpropane tri(meth)acrylate, dipentaerythritol penta(meth)acrylate, and (poly)ethoxylated and/or propoxylated compounds of these compounds.

The compound having one isocyanate group and at least one ethylenically unsaturated group used in the method (4) is preferably a compound having one isocyanate group and at least one (meth)acryloyloxy group, and specific examples thereof include (meth)acryloyloxymethyl isocyanate, (meth)acryloyloxyethyl isocyanate, (meth)acryloyloxypropyl isocyanate, and 1,1-bis((meth)acryloyloxymethyl)ethyl isocyanate.

In the methods (1) to (4), a polyol compound having no ethylenically unsaturated group may also be used. The polyol compound used may be a low molecular weight polyol compound, and a high molecular weight polyol compound having a molecular weight (which is a weight average molecular weight when the compound has a molecular weight distribution) exceeding 1,000 may be used.

Examples of the low molecular weight polyol compound include ethylene glycol, diethylene glycol, propylene glycol, dipropylene glycol, neopentyl glycol, 1,3-propanediol, 1,3-butanediol, 1,4-butanediol, 1,5-pentanediol, 1,6-hexanediol, 1,7-heptanediol, 1,8-octanediol, 2-ethyl-1,6-hexanediol, cyclohexanedimethanol, trimethylolpropane, ditrimethylolpropane, glycerol, pentaerythritol, and dipentaerythritol.

Examples of the high molecular weight polyol compound include a polyester polyol compound, polyether polyol compound, a polycarbonate polyol compound, a polyacrylate polyol compound, and mixtures of these compounds. Among these, the high molecular weight polyol compound is preferably a polyether polyol compound from the standpoint of the hydrolysis resistance, and is preferably a polycarbonate polyol compound from the standpoint of the light resistance.

In addition to the aforementioned compounds, a chain extender may also be used. The chain extender preferably contains one or two or more active amino groups capable of performing chain extension of the residual isocyanate end group. The chain extender is preferably a polyamine compound, and specific examples thereof include hydrazine, 1,2-ethylenediamine, 1,4-butanediamine, 1,6-hexanediamine, 2-methyl-1,5-pentanediamine, 1,8-octanediamine, 1,10-decanediamine, 1,12-dodecanediamine, piperazine, isophoronediamine, *m*-xylylenediamine, a polyethylenediamine compound, a polyoxyethylenediamine compound, and a polyoxypropylenediamine compound.

The chain extender used may also be a bifunctional polythiol compound, and may also be sulfur.

The content of the chain extender is preferably 10% or less in terms of equivalent with respect to the isocyanate groups of the isocyanate-terminated urethane prepolymer.

The coating composition of the present invention preferably contains water, and is more preferably an aqueous coating composition, as described later. Accordingly, the component B is preferably dispersed in water.

For the purpose of enhancing the dispersibility of the component B in water, a hydrophilic group may be introduced to the component B. Specific examples thereof include a method of using a compound containing an ionic or nonionic hydrophilic group and a hydroxy group. Examples of the ionic hydrophilic group include a sulfonic acid group and a carboxylic acid group. Examples of the nonionic hydrophilic group include a polyoxyethylene group and a polyoxypropylene group. Examples of the compound containing a hydrophilic group and a hydroxy group include citric acid, malic acid, lactic acid, and tartaric acid. For the method of introducing a hydrophilic group to the component B to form an aqueous dispersion, reference may be made to JP 2015-163696 A.

As described in JP 7-292046 A, such a method may be employed that a urethane prepolymer having an isocyanate group at the molecular end is emulsified and dispersed in water, then a polyamine having at least two primary amino groups and at least one secondary amino group in one molecule is added thereto and reacted in the presence of water, and to the resulting active amino group-containing polyurethane emulsion, an ethylenically unsaturated group-containing isocyanate compound is added and reacted in the presence of water, so as to provide an aqueous dispersion of polyurethane.

Furthermore, as described in JP 7-138515 A, such a method may be employed that a polyol compound containing no ethylenically unsaturated group, a polyol compound containing at least one ethylenically unsaturated group, and a polyisocyanate compound are reacted to provide a urethane prepolymer having an isocyanate group at an end thereof dispersed in water, which is increased in molecular weight by adding thereto a compound selected from the group consisting of a polyamine compound containing a primary amino group and/or a secondary amino group, a ketimine compound of a diamine and/or a triamine, and water, so as to provide an aqueous dispersion of polyurethane.

In the present invention, a catalyst may be used in the reaction of a polyol compound, a polyisocyanate compound, and the like, and examples thereof include a salt of a metal and an organic or inorganic acid, such as a tin catalyst (e.g., dibutyltin dilaurate, dioctyltin dilaurate, and trimethyltin laurate) and a lead catalyst (e.g., lead octylate), an organic metal derivative, an amine catalyst (e.g., triethylamine, *N*-ethylmorpholine, and triethylenediamine), and a diazabicycloundecene catalyst. Among these, a tin catalyst is preferred, and dibutyltin dilaurate and dioctyltin dilaurate are more preferred, from the standpoint of the reactivity.

The reaction temperature is not particularly limited, and is preferably from 40 to 120°C. In the aforementioned range, the resulting polyurethane may have appropriate viscosity enabling sufficient stirring, and can be prevented from suffering such problems as gelation due to polymerization reaction of the ethylenically unsaturated group, and side reaction caused by the isocyanate group.

For preventing unnecessary polymerization of the ethylenically unsaturated group, the synthesis of the polyurethane is preferably performed in the presence of oxygen.

For preventing unnecessary polymerization of the ethylenically unsaturated group, a polymerization inhibitor may be added to the reaction system.

Examples of the polymerization inhibitor include a quinone polymerization inhibitor, such as hydroquinone, hydroquinone monomethyl ether, benzoquinone, 2-*tert*-butylhydroquinone, *p*-tert-butylcatechol, 2,5-bis(1,1,3,3-tetramethylbutyl)hydroquinone, and 2,5-bis(1,1-dimethylbutyl)hydroquinone; an alkylphenol polymerization inhibitor, such as 2,6-bis(1,1-dimethylethyl)-4-methylphenol, 2,6-di-*tert*-butylphenol, 2,4-di-*tert*-butylphenol, 2-*tert*-butyl-4,6-dimethylphenol, 2,6-di-*tert*-butyl-4-methylphenol, and 2,4,6-tri-*tert*-butylphenol; an aromatic amine polymerization inhibitor, such as phenothiazine; an amine polymerization inhibitor, such as an alkylated diphenylamine, *N*,*N'*-diphenyl-*p*-phenylenediamine, phenothiazine, 4-hydroxy-2,2,6,6-tetramethylpiperidine, 4-benzoyloxy-2,2,6,6-tetramethylpiperidine, 1-hydroxy-4-benzoyloxyl-2,2,6,6-tetramethylpiperidine, and di-*p*-fluorophenylamine, 2,2,6,6-tetramethylpiperidine-1-oxyl (TEMPO); a quaternary ammonium chloride, such as 2,2-diphenylpicrylhydrazyl (DPPH), *N*-(3-oxyanilino-1,3-methylbutylidene)aniline oxide, and benzyltrimethylammonium chloride; an organic acid, such as diethylhydroxyamine, a cyclic amide, a nitrile compound, a substituted urea, benzothiazole, bis(1,2,2,6,6-pentamethyl-4-piperidinyl) sebacate, lactic acid, oxalic acid, citric acid, tartaric acid, and benzoic acid; an organic phosphine, and a phosphite salt. The polymerization inhibitor may be used solely or as a combination of two or more kinds thereof. In particular, a quinone polymerization inhibitor and an alkylphenol polymerization inhibitor are preferably used in combination.

The reaction may be performed without a solvent, or may be performed in the presence of an organic solvent. Examples of the organic solvent include acetone, methyl ethyl ketone, methyl isobutyl ketone, tetrahydrofuran, dioxane, dimethylformamide, dimethyl sulfoxide, *N*-methylpyrrolidone, *N*-ethylpyrrolidone, and ethyl acetate. Among these, acetone, methyl ethyl ketone, and ethyl acetate are preferred since these solvents can be removed by heating under reduced pressure after dispersing the polyurethane or the polyurethane prepolymer in water. *N*-methylpyrrolidone and *N*-ethylpyrrolidone are preferred since these solvents function as a film forming assistant in the production of a coated film with the aqueous coating composition containing the resulting polyurethane.

The amount of the solvent is preferably from 0 to 200 parts by mass, and more preferably from 1 to 100 parts by mass, per 100 parts by mass of the raw materials including the polyol, the polyisocyanate, and the like. The amount of the solvent in the aforementioned range is preferred since the resulting polyurethane resin may have good dispersibility in water, and the organic solvent can be easily removed.

The component B used may be a commercially available product, and examples of the aqueous polyurethane having an ethylenically unsaturated group include SuperFlex R-5002 (produced by Dai-ichi Kogyo Seiyaku Co., Ltd.) and NeoPac Series (such as R-9699, R-9029, E-125, and E-106), NeoRad Series (such as R-444) (all produced by Kusumoto Chemicals, Ltd.), and UVTKA Series (such as UVTKA-420) (produced by Tokushiki Co., Ltd.).

Examples of the component B include Shikoh Series (such as UV6640B (polyether urethane acrylate oligomer, weight average molecular weight (Mw) = 5,000), UV3310B (polycarbonate urethane acrylate oligomer, weight average molecular weight (Mw) = 5,000), UV3200B (polyester urethane acrylate oligomer, weight average molecular weight (Mw) = 10,000), UV3700B (polyether urethane acrylate oligomer, weight average molecular weight (Mw) = 38,000), UV6300B (urethane acrylate oligomer-containing composition, weight average molecular weight (Mw) = 1,800), and UV7605B (urethane acrylate oligomer-containing composition, weight average molecular weight (Mw) = 3,900)) (all produced by Nippon Synthetic Chemical Industry Co., Ltd.).

In the present invention, the weight average molecular weight of the component B is preferably from 900 to 20,000, more preferably from 900 to 10,000, and further preferably from 900 to 5,000. The weight average molecular weight in the aforementioned range is preferred since excellent film forming capability may be obtained, and thereby excellent adhesion to the base material may be obtained.

In the present invention, the weight average molecular weight may be measured by gel permeation chromatography (GPC), and converted with polystyrene having a known molecular weight.

The content of an ethylenically unsaturated group in the component B is preferably from 0.1 to 10 mmol/g, more preferably from 0.2 to 5 mmol/g, and further preferably from 0.4 to 2.5 mmol/g, from the standpoint of the curing property and the flexibility of the cured film.

### <Radical Generator (C)>

The radical generator (C) used may be at least one of a thermal radical generator and a photoradical generator. Among these, a photoradical generator can be used as similar to a thermal radical generator from the standpoint of adhering a coating agent containing the coating composition to at least a part of a surface of a rubber article. From the standpoint of the enhancement of the adhesion to a rubber article, a thermal radical generator is preferred, a thermal radical generator formed of a peroxide is more preferred, and a thermal radical generator formed of an organic peroxide is further preferred. The radical generator (C) may be used solely or as a combination of two or more kinds thereof.

The photoradical generator used may be a wide range of known ones without particular limitation.

Examples thereof include an intramolecular cleavage type photoradical generator, and examples thereof include a benzoin alkyl ether photoradical generator, such as benzoin ethyl ether, benzoin isobutyl ether, and benzoin isopropyl ether; an acetophenone radical generator, such as 2,2-diethoxyacetophenone and 4'-phenoxy-2,2-dichloroacetophenone; a propiophenone photoradical generator, such as 2-hydroxy-2-methylpropiophenone, 4'-isopropyl-2-hydroxy-2-methylpropiophenone, and 4'-dodecyl-2-hydroxy-2-methylpropiophenone; an alkylphenone photoradical generator, such as benzyl methyl ketal and 1-hydroxycyclohexyl phenyl ketone; an anthraquinone photoradical generator, such as 2-ethylanthraquinone and 2-chloroanthraquinone; and an acylphosphine oxide photoradical generator, such as 2,4,6-trimethylbenzoyldiphenylphosphine oxide and bis(2,4,6-trimethylbenzoyl)phenylphosphine oxide.

Examples of a hydrogen abstraction type photoradical generator include a benzophenone-amine radical generator, a Michler's ketone-benzophenone photoradical generator, and a thioxanthone-amine photoradical generator. A non-abstraction type photoradical generator may be used for preventing the migration of the unreacted photoradical generator. Examples thereof include a polymerized product of an acetophenone radical generator and a compound obtained by adding a double bond of an acrylic group to benzophenone.

The photoradical generator may be used solely or as a combination of two or more kinds thereof.

Examples of the thermal radical generator formed of an organic peroxide include *t*-butyl-2-ethyl peroxyhexanoate, dilauroyl peroxide, 1,1,3,3-tetramethylbutyl peroxy-2-ethylhexanoate, 1,1-di(*t*-hexylperoxy)cyclohexanone, di-*t*-butyl peroxide, *t*-butylcumyl peroxide, 1,1-di(*t*-hexylperoxy)-3,3,5-trimethylcyclohexane, *t*-amyl peroxy-2-ethylhexanoate, di(2-*t*-butylperoxyisopropyl)benzene, di(*t*-butyl) peroxide, benzoyl peroxide 1,1'-di(2-*t*-butylperoxyisopropyl)benzene, benzoyl peroxide, 1,1'-di(*t*-butylperoxy)cyclohexane, di(3,5,5-trimethylhexanoyl) peroxide, *t*-butyl peroxyneodecanoate, *t*-hexyl peroxyneodecanoate, and dicumyl peroxide. Among these, at least one of *t*-butyl-2-ethyl peroxyhexanoate, dilauroyl peroxide, 1,1,3,3-tetramethylbutyl peroxy-2-ethylhexanoate, 1,1-di(*t*-hexylperoxy)cyclohexanone, di-*t*-butyl peroxide, and *t*-butylcumyl peroxide is preferred. The thermal radical generator formed of an organic peroxide may be used solely or as a combination of two or more kinds thereof.

Examples of the thermal radical generator formed of an inorganic peroxide include a redox generator containing a combination of an oxidizing agent and a reducing agent, such as a combination of hydrogen peroxide and iron(II) salt, and a combination of a persulfate salt and sodium hydrogen sulfite. The thermal radical generator formed of an inorganic peroxide may be used solely or as a combination of two or more kinds thereof.

The 1-minute half-life temperature of the thermal radical generator is preferably from 70 to 200°C, more preferably from 80 to 160°C, and further preferably from 100 to 150°C.

The 1-minute half-life temperature of the thermal radical generator in the aforementioned range is preferred since good productivity may be obtained, deterioration of rubber may be suppressed, and the process cost can be suppressed.

The component C may be used solely or as a combination of two or more kinds thereof.

The content of the component C in the coating composition of the present invention is preferably from 0.5 to 200 parts by mass, more preferably from 1 to 150 parts by mass, and further preferably from 10 to 100 parts by mass, per 100 parts by mass of the component B.

In the case where the component C is a thermal radical generator, assuming that the total molar number of thiol groups contained in the polythiol compound (A) contained in the composition is represented by A1, and the total molar number of the thermal radical generator (C) contained in the composition is represented by C1, the ratio thereof (C1/A1) is preferably 4 or less, more preferably 3 or less, and further preferably 2 or less, and is preferably 0.2 or more, more preferably 0.3 or more, and further preferably 0.4 or more. The ratio C1/A1 in the aforementioned range is preferred since an appropriate reaction rate of radical polymerization may be obtained, and the resulting film may have a good crosslinked state.

### <Water (D)>

The coating composition of the present invention preferably contains water (D) (which may be hereinafter referred to as a component D) as a solvent or a dispersion medium. With water contained, the composition can be easily coated, and a cured film having a small film thickness can be formed. Furthermore, as compared to an organic solvent, the coating liquid can be diluted to enhance the coating property without causing the VOC (volatile organic compound) problem.

The component D may be appropriately selected from ion exchange water, pure water, and the like, and is preferably pure water.

The content of the component D is not particularly limited. While the solid content is preferably as high as possible since water can be easily removed, a viscosity enabling a coating operation is necessarily ensured, and particularly in the case where spray coating is performed, a viscosity enabling a spraying operation is necessarily ensured. In this point of view, the composition is preferably diluted to provide a solid content of from 80 to 10% by mass, and more preferably from 70 to 20% by mass.

### <Optional Component>

The coating composition of the present invention may contain an optional component. Examples of the optional component include a surface conditioner, a solvent, an ethylenically unsaturated compound, a binder, a filler, a pigment dispersant, an electroconductivity imparting agent, an ultraviolet ray absorbent, an antioxidant, an anti-drying agent, a penetrating agent, a pH controlling agent, a sequestering agent, an antibacterial and antifungal agent, a surfactant, a plasticizer, wax, and a leveling agent.

### (Surface Conditioner)

The surface conditioner may be an arbitrary surface conditioner. Examples of the surface conditioner include an acrylic series, a vinyl series, a silicone series, and a fluorine series. Among these, a silicone series is preferred from the standpoint of the compatibility and the capability of reducing the surface tension.

The surface conditioner is preferably contained in an amount of from 0.001 to 10% by mass in the coating composition.

### (Solvent)

The solvent is not particularly limited, as far as it does not react with the other blended components, and examples thereof include an aromatic solvent and an aliphatic solvent. The solvent herein means a solvent except for water.

Specific examples of the aromatic solvent include toluene and xylene. Examples of the aliphatic solvent include hexane, acetone, methyl ethyl ketone (MEK), methyl isobutyl ketone (MIBK), and ethyl acetate.

In the case where the coating composition of the present invention is an aqueous system, and the base material is rubber, a water-miscible organic solvent, such as 2-propanol, may be added for enhancing the affinity to the coating composition. A water-miscible organic solvent having a high boiling point is preferably added, and specific examples thereof include butyl cellosolve. In the case where an organic solvent is added to the aqueous coating composition, the amount of the organic solvent added is preferably 30 parts by mass or less, more preferably 20 parts by mass or less, and further preferably 10 parts by mass or less, per 100 parts by mass of the solid content of the component B.

In the case where the coating composition of the present invention does not contain water, the solvent is preferably added to make a solid content of from 80 to 10% by mass, and more preferably from 70 to 20% by mass.

### (Ethylenically Unsaturated Compound)

An ethylenically unsaturated compound (i.e., a compound having a carbon-carbon double bond) may be blended as an optional component. The ethylenically unsaturated compound herein is except for the component B.

The ethylenically unsaturated compound is preferably a (meth)acrylate compound.

Examples of the monofunctional ethylenically unsaturated compound include (meth)acryloylmorpholine, 2-ethylhexyl (meth)acrylate, styrene, methyl (meth)acrylate, tetrahydrofurfuryl (meth)acrylate, dodecyl (meth)acrylate, cyclohexyl (meth)acrylate, dicyclopentenyl (meth)acrylate, dicyclopentenyloxyethyl (meth)acrylate, phenoxyethyl (meth)acrylate, isobornyl (meth)acrylate, *N*-vinyl-2-pyrrolidone, polyethylene glycol mono(meth)acrylate, polypropylene glycol mono(meth)acrylate, polyethylene glycol-polypropylene glycol mono(meth)acrylate, poly(ethylene glycol-tetramethylene glycol) mono(meth)acrylate, poly(propylene glycol-tetramethylene glycol) mono(meth)acrylate, methoxypolyethylene glycol mono(meth)acrylate, octoxypolyethylene glycol-polypropylene glycol mono(meth)acrylate, lauroxypolyethylene glycol mono(meth)acrylate, stearoxypolyethylene glycol mono(meth)acrylate, nonylphenoxypolyethylene glycol mono(meth)acrylate, and nonylphenoxypolypropylene glycol-polyethylene glycol mono(meth)acrylate.

Examples of the di(meth)acrylate include ethylene glycol di(meth)acrylate, propylene glycol di(meth)acrylate, neopentyl glycol di(meth)acrylate, polyethylene glycol di(meth)acrylate, polypropylene glycol di(meth)acrylate, 1,4-butanediol di(meth)acrylate, 1,6-hexanediol di(meth)acrylate, tricyclodecanedimethanol di(meth)acrylate, polyethylene glycol di(meth)acrylate, polypropylene glycol di(meth)acrylate, polyethylene glycol-polypropylene glycol di(meth)acrylate, poly(ethylene glycol-tetramethylene glycol) di(meth)acrylate, poly(propylene glycol-tetramethylene glycol) di(meth)acrylate, methoxypolyethylene glycol di(meth)acrylate, octoxypolyethylene glycol-polypropylene glycol di(meth)acrylate, lauroxypolyethylene glycol di(meth)acrylate, stearoxypolyethylene glycol di(meth)acrylate, nonylphenoxypolyethylene glycol di(meth)acrylate, and nonylphenoxypolypropylene glycol-polyethylene glycol di(meth)acrylate.

Examples of the tri(meth)acrylate include trimethylolpropane tri(meth)acrylate, an ethylene oxide-modified trimethylolpropane tri(meth)acrylate, a propylene oxide-modified trimethylolpropane tri(meth)acrylate, pentaerythritol tri(meth)acrylate, an alkylene oxide-modified trimethylolpropane tri(meth)acrylate (such as ethylene oxide (6 mol)-modified trimethylolpropane triacrylate (Laromer (trade name) LR8863, produced by BASF SE) and Laromer (trade name) PO33F, produced by BASF SE).

Examples of the tetra(meth)acrylate include pentaerythritol tetra(meth)acrylate and an alkylene oxide-modified pentaerythritol tetra(meth)acrylate, such as ethylene oxide (4 mol)-modified pentaerythritol tetra(meth)acrylate (Ebecryl 40, available from Daicel-Cytec Co., Ltd.).

Examples of the penta(meth)acrylate include dipentaerythritol penta(meth)acrylate.

Examples of the hexa(meth)acrylate include dipentaerythritol hexa(meth)acrylate.

The (meth)acrylate compound of a polymer used may be a known one. Examples of the (meth)acrylate compound of a polymer include mono(meth)acrylate and a poly(meth)acrylate, such as a di(meth)acrylate, a tri(meth)acrylate, and a tetra(meth)acrylate.

### (Additional Polymer)

The coating composition of the present invention may contain an additional polymer in addition to the component B. Examples of the additional polymer include a polyurethane containing no ethylenically unsaturated group, an acrylic resin, a polyester resin, a polyamide resin, and a polyolefin resin.

In the present invention, the content of the additional polymer is preferably 50% by mass or less, more preferably 30% by mass or less, further preferably 10% by mass or less, still further preferably 5% by mass or less, and still more further preferably 1% by mass or less, based on the component B.

The coating composition according to the present invention may contain an optional component in addition to the components A to C as the essential components as described above. However, from the standpoint of providing strong adhesion to a surface of rubber, particularly vulcanized rubber, the total content of the components (A) to (C) is preferably 80% by mass or more, more preferably 90% by mass or more, further preferably 95% by mass or more, and still further preferably 98% by mass or more, based on the solid content of the composition.

### <Preparation Method of Coating Composition>

The coating composition of the present invention may be prepared at least by mixing the components A to C, and may be prepared by dissolving or dispersing in a solvent, preferably water, depending on necessity. For spray coating the coating composition of the present invention, an organic solvent, such as acetone, MEK, and toluene, is preferably added to control the viscosity, so as to provide a suitable viscosity.

The preparation method of the coating composition of the present invention is not particularly limited, and the composition can be prepared preferably in the following manner.

In the case where the coating composition of the present invention is an aqueous composition, the component A is dispersed in the component B to provide a dispersion, which is then added dropwise to water containing a surfactant, followed by stirring, so as to disperse the component A and the component B in a mixed state in water. A water-dispersible radical generator is then added thereto, thereby preparing the coating composition of the present invention.

Such a manner may also be employed that the component A and the component C are dispersed in the component B to provide a dispersion, which is then added dropwise to water containing a surfactant, followed by stirring, so as to disperse the component A, the component B, and the component C in a mixed state in water, thereby preparing the coating composition of the present invention.

In the case where the coating composition of the present invention contains an organic solvent, the composition is preferably prepared in such a manner that the components A to C are added to and dissolved in the organic solvent.

### [Cured Film]

The cured film according to the present invention is formed by using the coating composition of the present invention described above. The coating composition of the present invention may be coated on at least a part of a surface of a base material, and then the coating composition may be subjected to at least one of heating and light irradiation, thereby forming the cured film. The base material that is preferred for the coating composition of the present invention will be described.

### <Base Material>

The base material, to which the coating composition of the present invention is to be applied, is preferably a rubber article, and the rubber article may be any of vulcanized rubber and unvulcanized rubber. The rubber constituting the rubber article preferably has a carbon-carbon double bond (i.e., an ethylenically unsaturated bond). In this case, it is estimated that the carbon atoms of the ethylenically unsaturated bond of the rubber article in contact with the coating composition of the present invention and the sulfur atom of the thiol group of the polythiol compound (A) of the coating composition form a carbon-sulfur bond through ene-thiol reaction.

However, even though the rubber constituting the rubber article preferably does not have a carbon-carbon double bond, it is estimated that the coating composition of the present invention can be preferably applied thereto. In this case, it is estimated that hydrogen abstraction reaction from the carbon-carbon bond main chain existing in the rubber is performed with the polythiol compound (A), and thereby the sulfur atom of the thiol group of the polythiol compound (A) and the carbon atom of the carbon-carbon bond are chemically bonded to each other. However, from the standpoint of the enhancement of the adhesion, the base material preferably has an ethylenically unsaturated bond, and more preferably contains diene rubber.

The diene rubber may be any of natural rubber and synthetic diene rubber.

Examples of the synthetic diene rubber include synthetic isoprene rubber (IR), polybutadiene rubber (BR), styrene-butadiene copolymer rubber (SBR), acrylonitrile butadiene rubber (NBR), chloroprene rubber (CR), butyl rubber (IIR), halogenated butyl rubber (such as Cl-IIR and Br-IIR), ethylene-propylene copolymer rubber (EPM), ethylene-propylene-diene copolymer rubber (EPDM), ethylene-butadiene copolymer rubber, and propylene-butadiene copolymer rubber. Examples of other kinds of rubber used as a material of the rubber article include synthetic rubber, such as Hypalon rubber (chlorosulfonated polyethylene rubber), ethylene-propylene copolymer rubber (EPM), and polysiloxane rubber. The rubber may be used as a combination of two or more kinds thereof.

A method for producing the cured film by using the coating composition will be described.

The cured film can be obtained by coating and curing the coating composition on at least a surface of a base material, preferably a rubber article.

When the coating composition is coated on at least a part of the surface of the rubber article, the coating method is not limited. Various coating methods are encompassed therein, such as a coating method by handwork or machine operation, such as brush coating, roller brush coating, padding coating, and spatula coating; a coating method by ink-jet printing; a spray coating method, such as hot spray coating, airless spray coating, and hot airless spray coating; curtain flow coating; flow coating; roll coating; gravure coating; dip coating; drum coating; spin coating; reverse coating; bar coating; screen coating; blade coating; air knife coating; dispensing with a dispenser; a T-die molding method; and a thin film extrusion molding method.

After coating, the coating composition may be allowed to stand for a prescribed period of time depending on necessity. The standing time in this case is preferably from 0 to 30 minutes, and more preferably from 1 to 15 minutes, from the standpoint of the shape retention of the coating composition for preventing the coating composition from being leaked on curing. In the case where the coating composition of the present invention is controlled in viscosity with an organic solvent, such as MEK, in particular, the coating composition is preferably allowed to stand for removing the organic solvent after coating.

In the case where the coating composition contains a thermal radical generator, the curing is preferably performed by heating. The heating temperature may be appropriately selected in such a manner that the thermal radical generator efficiently generates radicals, and is preferably approximately ±30°C of the 1-minute half-life temperature of the thermal radical generator. Specifically, the heating temperature is preferably from 90 to 150°C, more preferably from 100 to 140°C, and further preferably from 110 to 130°C.

In the case where the coating composition contains a photoradical generator, the curing is preferably performed by light irradiation. The light that is preferably used may be at least one selected from an electromagnetic ray, such as an ultraviolet ray, a visible ray, an infrared ray, and an X-ray; and a particle beam, such as an α ray, a γ ray, and an electron beam. Among these, an ultraviolet ray is preferred as the light. A light source used is preferably an ultraviolet lamp from the standpoint of the enhancement of the adhesion and the reduction of the cost. The light irradiation time is preferably several seconds to several tens of seconds, more preferably from 1 to 40 seconds, and further preferably from 3 to 20 seconds, from the same standpoint.

Among these, the curing of the coating composition is preferably performed by heating, and the coating composition of the present invention preferably contains a thermal radical generator.

The film thickness of the cured film is not particularly limited, and is preferably from 5 to 200 µm, more preferably from 10 to 150 µm, and further preferably from 20 to 100 µm. The film thickness of the cured film in the aforementioned range is preferred since excellent scratch resistance can be obtained, and the ozone resistance of the base material can be enhanced.

The tensile stress (modulus) of the cured film obtained by curing the coating composition of the present invention is preferably smaller than the tensile stress of the base material. In other words, the cured film is preferably softer than the base material. In the case where the coating composition of the present invention is used as a coating composition for a tire, in particular, the tensile stress at 25% elongation (modulus, M25) of the cured film is preferably 7 MPa or less, more preferably 5 MPa or less, further preferably 3 MPa or less, and still further preferably 1 MPa or less.

The M25 of the cured film is determined in such a manner that the cured film is formed on a base material, the base material is sliced to a film thickness of the base material of 0.5, 1, and 2 mm, the property (M25) is plotted as ordinate, whereas the thickness of the base material is plotted as abscissa, and the y intercept thereof is designated as the property of the film only.

The M25 in the aforementioned range is preferred since the formation of cracks in the cured film can be suppressed.

The M25 may be measured according to JIS K6251:2010.

The elongation at break (Eb) at 25°C of the cured film is preferably 200% or more, more preferably 300% or more, and particularly preferably 400% or more.

The elongation at break of the cured film in the aforementioned range is preferred since the cured film can readily follow the rubber, the breakage thereof can be suppressed.

The elongation at break of the cured film can be obtained in such a manner that the cured film is formed on a base material, and the cured film is elongated along with the base material, and the elongation at the time when the film is cracked is measured. More specifically, a composite including the base material having formed thereon the cured film is punched into a dumbbell specimen No. 3, which is designated as a test piece. The test piece is elongated, the strain at the time when the cured film is released off from the base material or cracked is recorded, and the elongation with respect to the test piece before the test is designated as the elongation at break (Eb).

For making the tensile stress and the elongation at break of the cured film within the aforementioned ranges, it is preferred to control the number of the functional group in one molecule and the molecular weight of the component A, the molecular weight and the number of the functional group in one molecule of the component B, the amount of the component C, and the like.

### [Laminate]

The cured film, which is formed by curing the coating composition of the present invention, is preferably used for a laminate. Specifically, it is preferred that the coating composition is used as a coating of an arbitrary base material, and a laminate is formed with the cured film and the base material. The base material is preferably a rubber article as described above.

The laminate is preferably formed in such a manner that the coating composition of the present invention is coated on a base material, and the cured.

Examples of the laminate include a tire, antivibration rubber, seismic isolation rubber, a belt (conveyer belt), a rubber crawler, various hoses, and a foamed article.

With the cured film formed of the coating composition of the present invention provided, the ozone resistance of the rubber article as the base material can be enhanced.

The film thickness of the cured film is preferably from 5 to 200 µm, more preferably from 10 to 150 µm, and further preferably from 20 to 100 µm. The film thickness of the cured film in the aforementioned range is preferred since excellent scratch resistance can be obtained, and the ozone resistance of the base material can be enhanced.

### [Tire]

The coating composition of the present invention is particularly preferred as coating of a tire, and is preferably applied to a part of vulcanized rubber except for a tread, i.e., grooves (such as main grooves and lug grooves) and a side wall of a tire.

The method for coating the coating composition on the part except for a tread is not particularly limited, and examples thereof include: a method of spraying the coating composition with an air brush or the like onto the necessary portion; a method, in which a hydrophobic mask is formed only on the tread, then the tire is dipped in the coating composition, the coating composition on the tread is removed, and the coating composition is cured; and a method, in which the coating composition is coated on the entire exterior of the tire without a mask, the coating composition attached to the tread is removed, and then the coating composition is cured.

The film thickness of the cured film is preferably from 5 to 200 µm, more preferably from 10 to 150 µm, and further preferably from 20 to 100 µm. The film thickness of the cured film in the aforementioned range is preferred since excellent scratch resistance can be obtained, and the ozone resistance of the tire can be enhanced.

### <Base Material other than Rubber Article>

The coating composition of the present invention may be applied to a metal and a resin as a base material, in addition to a rubber article. The coating composition according to the present invention can also be strongly adhered to a surface of a metal and a surface of a resin.

To the surface of the cured film formed by curing the coating composition of the present invention, a top coating agent, a paint, and the like for surface protection or decoration may be further attached. The compounds that can be used as the top coating agent, the paint, or the like are not particularly limited, as far as good adhesion to the cured film can be provided.

### Examples

The present invention will be described in more detail with reference to examples below, but the present invention is not limited to the examples below.

### [Blend Components of Coating Composition]

The components contained in coating compositions of Examples and Comparative Examples were as follows.

### <Component A: Polythiol Compound>

DPMP: Dipentaerythritol hexakis(3-mercaptopropyonate), produced by SC Organic Chemical Co., Ltd., number of thiol groups in one molecule: 6

TEMPIC: Tris((3-mercaptopropionyloxy)ethyl) isocyanurate, produced by SC Organic Chemical Co., Ltd., number of thiol groups in one molecule: 3

### <Component B: Polyurethane having Ethylenically Unsaturated Group>

### (Synthesis of Polyurethane b1)

Polycarbonate diol (T5650E, produced by Asahi Kasei Corporation, molecular weight: 500) and IPDI (isophorone diisocyanate) were accurately weighed to make a molar ratio hydroxy group/isocyanate group of 1/2 in a three-neck flask.

Under stirring at 100 rpm, dibutyltin laurate was added thereto in an amount of 0.01% in terms of equivalent with respect to the total amount of the polyol and the isocyanate.

The mixture was heated with a mantle heater to a liquid temperature of 70°C for 2 hours.

The loss of the polyol was confirmed by a hydroxy value method.

2-Hydroxyethyl acrylate (2-HEA) was accurately weighed to make a molar ratio of 1/2 with respect to the initial isocyanate group, and under stirring at 100 rpm, was added dropwise to the three-neck flask.

After completing the dropwise addition, the mixture was heated with a mantle heater to a liquid temperature of 70°C for 2 hours.

The loss of the isocyanate was confirmed by IR, and thus the reaction was completed.

The resulting polyurethane b1 had a weight average molecular weight of 1,000.

### (Polyurethanes b2 to b6)

Polyurethane b2: "UV6640B", a trade name, produced by Nippon Synthetic Chemical Industry Co., Ltd., polyether urethane acrylate oligomer, weight average molecular weight (Mw) = 5,000, number of functional groups = 2

Polyurethane b3: "UV3310B", a trade name, produced by Nippon Synthetic Chemical Industry Co., Ltd., polycarbonate urethane acrylate oligomer, weight average molecular weight (Mw) = 5,000, number of functional groups = 2

Polyurethane b4: "UV3200B", a trade name, produced by Nippon Synthetic Chemical Industry Co., Ltd., polyester urethane acrylate oligomer, weight average molecular weight (Mw) = 10,000, number of functional groups = 2

Polyurethane b5: "UV6300B", a trade name, produced by Nippon Synthetic Chemical Industry Co., Ltd., a composition comprising urethane acrylate oligomer, weight average molecular weight (Mw) = 1,800, number of functional groups = 7

Polyurethane b6: "UV7605B", a trade name, produced by Nippon Synthetic Chemical Industry Co., Ltd., a composition comprising urethane acrylate oligomer, weight average molecular weight (Mw) = 3,900, number of functional groups = 6

Aqueous polyurethane: "SuperFlex E-4800", a trade name, produced by Dai-ichi Kogyo Seiyaku Co., Ltd., non-reactive polyether polyurethane

### <Component C: Radical Generator>

Perbutyl O: *tert*-Butyl peroxy-2-ethylhexanoate, produced by NOF Corporation, 1-minute half-life temperature = 134.0°C

### <Others>

BYK-307: Mixture of polyether-modified polydimethylsiloxane and polyether, a surface conditioner (leveling agent), produced by BYK-Chemie Japan K.K., content: 100%

### [Evaluation]

The evaluation in Examples and Comparative Examples was performed in the following manner.

### (1) Flexural Fatigue Resistance

According to the test method of "De Mattia flex cracking test method for vulcanized rubber and thermoplastic rubber" of JIS K6260:2010, the number of times until the film part formed a crack of 1 mm was measured under condition of a room temperature of 25°C, and was expressed in terms of index with respect to the control as 100. A larger value means better flexural fatigue resistance. The results are shown in Table 1.

### (2) Scratch Resistance Test

The scratch resistance was evaluated by a scratch test.

Scratch test: At a room temperature of 20°C, by using a coin scratch tester (produced by Jidoka Giken Kogyo K.K.), an edge of a 10 yen copper coin held at an angle of 45° was pressed onto the front coated surface of the coated plate for testing, and the 10 yen copper coin was drawn thereon at a speed of 10 mm/sec by approximately 30 mm under application of a load of 3 kg, so as to scratch the coated surface. The extent of the scratch thus formed was evaluated according to the following standard. The adhesion to the base material is also evaluated by this test.
A: No rubber base was found in the scratch.
B: The rubber base was slightly found in the scratch.
C: The rubber base was significantly found in the scratch.

### (3) Eb

A composite including the base material having formed thereon the cured film was punched into a dumbbell specimen No. 3, which was designated as a test piece. The test piece was elongated, the strain at the time when the cured film was released off from the base material or a crack was recorded, and the elongation with respect to the test piece before the test was designated as the elongation at break (Eb).

### (4) M25

The tensile stress (modulus, M25) of the cured film was determined in such a manner that the cured film was formed on a base material, the base material was sliced to a film thickness of the base material of 0.5, 1, and 2 mm, the property (M25) was plotted as ordinate, whereas the thickness of the base material was plotted as abscissa, and the y intercept thereof was designated as the property of the film only.

The M25 was measured according to JIS K6251:2010.

### [Preparation of Coating Compositions]

### <Examples 1 to 11 and Comparative Examples 1 and 2>

The components A to C shown in Table 1, to which acetone was added in an amount of approximately 3 times the component A for controlling the viscosity, were stirred and spray-coated on a base material with an air brush.

### <Example 12 and Comparative Example 3>

According to the formulation shown in Table 1, to a mixed liquid of 300 parts in total of the urethane and the thiol and 150 parts of MEK added thereto at 60 to 70°C, 750 parts of ion exchange water having 15 parts of Emulgen 104P added thereto in advance was added under stirring, and after dispersing at 30 to 40°C for 30 minutes, the solvent (MEK) was removed to provide an aqueous polyurethane resin composition.

### [Production of Cured Films]

The coating composition was spray-coated on a base material to form the dry thickness shown in Table 1, and a film was formed under the condition shown in the column, Film forming condition. The resulting composite of the base material and the cured film was evaluated for the flexural fatigue resistance, the scratch resistance test, the Eb, and the M25. The results are shown in Table 1 below.

The base material used was vulcanized rubber obtained by vulcanizing the composition shown in Table 2 at 160°C for 15 minutes.

**Table 1**

| | | Example | | | | | | | | | | | | Comparative Example | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 |
| Polyurethane | b1 (Mw = 1,000) | 50 | 50 | 50 | 50 | - | - | - | - | - | 100 | 100 | 100 | - | - | - |
| | b2 (Mw = 5,000) | - | - | - | - | 100 | - | - | - | - | - | - | - | - | - | - |
| | b3 (Mw = 5,000) | - | - | - | - | - | 100 | - | - | - | - | - | - | - | - | - |
| | b4 (Mw = 10,000) | - | - | - | - | - | - | 100 | - | - | - | - | - | 100 | 100 | - |
| | b5 (Mw = 1,800) | 50 | 50 | 50 | 50 | - | - | - | 100 | - | - | - | - | - | - | - |
| | b6 (Mw = 3,900) | - | - | - | - | - | - | - | - | 100 | - | - | - | - | - | - |
| Aqueous urethane (E4800) | | - | - | - | - | - | - | - | - | - | - | - | - | - | - | 100 |
| Polythiol | DPMP | - | - | - | 25 | - | - | - | - | - | 1 | 0.1 | - | - | - | - |
| | TEMPIC | 35 | 35 | 35 | - | 7 | 7 | 3.5 | 19.5 | 9 | - | - | 35 | - | 35 | 10 |
| Radical generator | Perbutyl O | 21 | 21 | 42 | 43 | 2.1 | 2.1 | 2.1 | 12 | 5.5 | 21 | 20 | - | 21 | - | 10 |
| | Potassium peroxodisulfate | - | - | - | - | - | - | - | - | - | - | - | 20 | - | - | - |
| Surface conditioner | BYK-307 | - | - | - | - | - | - | - | - | - | - | - | 1 | - | - | - |
| Water or solvent | Butyl cellosolve | 5 | 5 | 5 | 5 | 5 | 5 | 5 | 5 | 5 | 5 | 5 | 5 | 5 | 5 | 5 |
| | Acetone | added | added | added | added | added | added | added | added | added | added | added | - | added | added | - |
| | Water (containing Emulgen 104P) | - | - | - | - | - | - | - | - | - | - | - | added | - | - | added |
| Film thickness (µm) | | 50 | 5 | 50 | 50 | 50 | 50 | 50 | 50 | 50 | 250 | 50 | 50 | - | - | 50 |
| Film forming condition | | 130°C 10 min | 130°C 10 min | 130°C 10 min | 130°C 10 min | 130°C 10 min | 130°C 10 min | 130°C 10 min | 130°C 10 min | 130°C 10 min | 130°C 10 min | 130°C 10 min | 130°C 10 min | 130°C 10 min | 130°C 10 min | 130°C 10 min |
| Evaluation | Flexural fatigue resistance | 1,500 or more | 1,500 or more | 1,500 or more | 1,500 or more | 1,500 or more | 1,500 or more | 1,500 or more | 1,500 or more | 1,500 or more | 200 | 100 | 1,500 or more | - | - | 100 |
| | Scratch resistance | A | B | A | A | A | A | B | A | A | A | A | A | - | - | C |
| | Eb | 300% or more | 300% or more | 300% or more | 300% | 300% or more | 300% or more | 300% or more | 300% or more | 300% or more | 300% | 200% | 300% or more | - | - | 300% |
| | M25 (MPa) | 0.7 | 0.7 | 0.7 | 0.7 | 0.6 | 0.6 | 0.5 | 0.7 | 0.7 | 2.0 | 4.0 | 0.7 | - | - | 0.6 |

**Table 2**

| | Formulation (part by mass) |
|---|---|
| SBR *1 | 100 |
| Carbon black *2 | 27 |
| Silica *3 | 27 |
| Silane coupling agent *4 | 2.5 |
| Aromatic oil | 15 |
| Stearic acid | 2 |
| Antiaging agent *5 | 1 |
| Zinc oxide | 3 |
| Vulcanization accelerator DPG *6 | 0.8 |
| Vulcanization accelerator DM *7 | 1 |
| Vulcanization accelerator NS *8 | 1 |
| Sulfur | 1.5 |

The components in Table 2 are as follows.
*1: "#1500", produced by JSR Corporation
*2: Seast KH (N339), a trade name, produced by Tokai Carbon Co., Ltd.
*3: Nipsil AQ, a trade name, produced by Nippon Silica Kogyo Co., Ltd.
*4: Si69, a trade name, produced by Degssa AG, bis(3-triethoxysilylpropyl) tetrasulfide
*5: *N*(1,3-dimethylbutyl)-*N'*-phenyl-*p*-phenylenediamine
*6: diphenylguanidine
*7: dibenzothiazyl disulfide
*8: *N*-*t*-butyl-2-benzothiazyl sulfenamide

As shown in Table 1, the cured films formed with the coating compositions of the present invention were excellent in the adhesion to a base material and the flexural fatigue resistance.

In Comparative Examples 1 and 2, on the other hand, it was difficult to form a film due to the tackiness of the cured film, or the like, and the film was not suitable for the evaluation of a cured film. Furthermore, in Comparative Example 3 using the aqueous urethane, the adhesion to the base material (scratch resistance) was deteriorated.

### Industrial Applicability

According to the present invention, a coating composition that is capable of providing a cured film excellent in adhesion to a base material and flexural fatigue resistance can be provided, and according to the present invention, furthermore, a cured film obtained from the coating composition, and a tire having the cured film formed thereon can be provided.

## Claims

1. A coating composition comprising:
a polythiol compound (A),
a polyurethane having an ethylenically unsaturated group (B), and
a radical generator (C).

2. The coating composition according to claim 1, further comprising water (D).

3. A cured film, which is formed by curing the coating composition according to claim 1 or 2.

4. The cured film according to claim 3, which has a tensile stress at 25% elongation (modulus M25) of 3 MPa or less.

5. A laminate comprising the cured film according to claim 3 or 4.

6. A tire comprising the cured film according to claim 3 or 4 formed at least on a part of an external surface thereof.

7. A tire comprising the cured film according to claim 3 or 4 formed on grooves of a tread and/or a sidewall thereof.

8. The tire according to claim 6 or 7, wherein the cured film has a thickness of from 5 to 200 µm.
